(19) Europäisches Patentamt / European Patent Office / Office européen des brevets

(11) **EP 1 498 737 B1**

(12) **FASCICULE DE BREVET EUROPEEN**

(45) Date de publication et mention
de la délivrance du brevet:
**08.08.2012 Bulletin 2012/32**

(51) Int Cl.:
*G01P 5/16* (2006.01)      *G01P 13/02* (2006.01)
*G01P 21/02* (2006.01)

(21) Numéro de dépôt: **04291523.1**

(22) Date de dépôt: **17.06.2004**

(54) **Procédé et dispositif de surveillance de la validité d'une information de vitesse d'un aéronef**

Verfahren und Vorrichtung zur Überprüfung von Geschwindigkeitswerten in einem Flugzeug

Method and device for monitoring the correctness of speed values in an airplane

(84) Etats contractants désignés:
**AT BE BG CH CY CZ DE DK EE ES FI FR GB GR HU IE IT LI LU MC NL PL PT RO SE SI SK TR**

(30) Priorité: **18.07.2003 FR 0308786**

(43) Date de publication de la demande:
**19.01.2005 Bulletin 2005/03**

(73) Titulaire: **AIRBUS OPERATIONS (SAS)**
**31060 Toulouse (FR)**

(72) Inventeur: **Seve, Philippe**
**31000 Toulouse (FR)**

(74) Mandataire: **Hauer, Bernard**
**Gevers France**
**23bis, rue de Turin**
**75008 Paris (FR)**

(56) Documents cités:
**US-A1- 2003 050 766      US-B1- 6 205 376**

**Description**

La présente invention concerne un procédé et un dispositif de surveillance de la validité d'une information de vitesse d'un aéronef, ainsi qu'un système de génération d'une information de vitesse comportant un tel dispositif de surveillance.

On sait que la connaissance de la vitesse d'un aéronef par rapport à l'air est primordiale pour le pilotage de cet aéronef. Aussi, l'équipage surveille de très près cette information (ou valeur) de vitesse, afin de conserver l'aéronef dans un domaine de vol défini par des vitesses minimale et maximale, pour lesquelles cet aéronef a été conçu. Pour un point de vol donné, au-dessous de la vitesse minimale, l'aéronef risque de décrocher, et au-dessus de la vitesse maximale, il est soumis à de fortes charges structurales, pour lesquelles il n'a pas été conçu. Il est donc important que l'équipage ait une connaissance juste et fiable de l'information de vitesse.

En outre, on sait également que les aéronefs, et notamment les avions tels que les avions de transport par exemple, sont équipés de différentes sondes conçues pour mesurer un certain nombre de paramètres. Ces paramètres sont ensuite transmis à des instruments de bord. Ainsi, certaines sondes, localisées à proximité du moteur de l'aéronef, fournissent des informations permettant de suivre le comportement dudit moteur (température d'éjection des gaz, régime, ...) ou de délivrer des informations concernant l'environnement dans lequel évolue l'aéronef (pression statique, pression dynamique totale, température, ...). D'autres sondes qui sont installées sur le fuselage délivrent exclusivement des informations de pression ou de température représentatives de l'environnement dans lequel évolue l'aéronef. Ces sondes sont redondantes et placées à des endroits différents de l'aéronef, afin d'éviter des pannes communes (panne de plusieurs sondes ayant une cause unique). Elles utilisent, par exemple, des anémomètres.

Il existe notamment des sondes, par exemple des sondes dites "pitots", qui sont destinées à mesurer la pression dynamique et des sondes, par exemple des sondes dites "poivrières", qui sont destinées à mesurer la pression statique.

Les valeurs de pression mesurées par les différentes sondes, sont en particulier utilisées par des calculateurs appropriés pour calculer des informations de vitesse de l'aéronef.

Ces informations de vitesse, à savoir, en général, trois informations de vitesse différentes par aéronef, sont ensuite utilisées par un calculateur de commande de vol de l'aéronef, pour calculer des ordres de commande de vol permettant de manoeuvrer l'aéronef. Ce calculateur de commande de vol vérifie, avant d'utiliser lesdites informations de vitesse, la cohérence entre ces informations. S'il estime qu'une information de vitesse est erronée ou aberrante (par exemple, lorsque la différence entre cette information et les autres est supérieure à un certain seuil), il écarte cette information de vitesse pour toute la durée du vol et ne surveille plus que les deux dernières. Dans le cas où la différence entre ces deux dernières informations de vitesse devient supérieure à un certain seuil prédéfini, le calculateur de commande de vol écarte définitivement, pour le reste du vol, ces deux informations, puisqu'il ne sait pas laquelle est devenue aberrante. Dans ce cas, ledit calculateur de commande de vol passe dans un mode dégradé et alerte l'équipage que l'information de vitesse dont il dispose n'est plus fiable. L'aéronef n'est alors plus gouverné que par des lois de commande dites "dégradées" qui ne prennent plus en compte l'information de vitesse et qui sont donc moins précises et performantes.

Or, il existe des pannes pouvant passer totalement inaperçues au niveau du calculateur de commande de vol, mais ces pannes peuvent avoir des répercussions sur le pilotage de l'aéronef, qui peuvent s'avérer très pénalisantes.

Ainsi, lors d'opérations de maintenance, il est très fréquent de sécuriser les sondes "pitots" en les protégeant par un capuchon, ou même de débrancher les sondes "poivrières". Il peut arriver que, par un oubli du personnel de maintenance, l'aéronef décolle alors que les sondes ne sont pas décapuchonnées ou rebranchées. Elles ne sont alors plus opérationnelles et les valeurs qui sont délivrées et fournies aux calculateurs ne sont plus représentatives de l'environnement dans lequel évolue l'aéronef.

Il est également envisageable que, bien que n'étant pas opérationnelles, deux sondes "poivrières" délivrent des valeurs ou informations de vitesse cohérentes entre elles, mais complètement erronées. La cohérence des informations de vitesse entre elles conduit alors le calculateur de commande de vol à écarter la valeur délivrée par la seule sonde opérationnelle (la troisième sonde "poivrière" qui engendre dans cette situation la seule valeur représentative de l'environnement dans lequel évolue l'aéronef) au profit des valeurs délivrées par ces deux sondes "poivrières" (délivrant des valeurs erronées). Dans ce cas, le calculateur de commande de vol calcule des ordres de commande avec des valeurs erronées et l'équipage fait confiance à une information de vitesse qui n'est pas fiable.

Une telle situation est très dangereuse. En effet, si l'information de vitesse fournit une vitesse qui est trop lente (respectivement trop rapide), l'équipage va être amené à accélérer (respectivement à décélérer), ce qui risque de faire voler l'aéronef dans un domaine de vitesses non autorisées. Il peut également arriver que la vitesse soit telle que les lois de commande ne couvrent pas ce cas, ce qui peut conduire à la perte de contrôle de l'aéronef.

Par ailleurs, la panne d'une sonde de mesure de pression statique ou totale peut également être engendrée par des phénomènes aérologiques qui sont parfois rencontrés en vol (givrage des sondes du fuselage) ou par l'obturation desdites sondes par de la poussière, des insectes ou d'autres corps étrangers.

La présente invention a pour objet de remédier à ces inconvénients. Elle concerne un procédé de surveillance de la validité d'au moins une information de vitesse d'un aéronef, qui est déterminée à partir d'au moins une valeur de pression statique et d'au moins une valeur de pression totale, procédé qui permet de détecter de façon simple, rapide et fiable toute information de vitesse non valable, c'est-à-dire ne correspondant pas (à une marge près) à la vitesse effective de l'aéronef.

A cet effet, selon l'invention, ledit procédé est remarquable en ce que l'on réalise, de façon répétitive, les étapes successives suivantes :

a) on prend en compte lesdites valeurs de pression statique et totale, utilisées pour déterminer ladite information de vitesse ;
b) on calcule, à partir desdites valeurs de pression statique et totale, un coefficient de portance qui est représentatif de la portance de l'aéronef ;
c) on calcule, à partir de ce coefficient de portance, une première valeur d'incidence ;
d) on détermine une seconde valeur d'incidence ;
e) on calcule la différence entre lesdites première et seconde valeurs d'incidence ;
f) on compare la valeur absolue de cette différence à une valeur de seuil prédéterminée ; et
g) on déduit de ladite comparaison que :

- ladite information de vitesse est valable, si la valeur absolue de ladite différence est inférieure à ladite valeur de seuil ; et
- ladite information de vitesse n'est pas valable, sinon.

Ainsi, grâce à l'invention, on est en mesure de détecter de façon simple, rapide et fiable tout défaut de validité d'une information de vitesse. Ceci permet de remédier aux inconvénients précités. En particulier, il n'existe plus de risque d'écarter une information de vitesse qui est valable et/ou de prendre en compte une qui n'est pas valable.

Dans un mode de réalisation particulier, on utilise au moins deux valeurs de pression statique, et à l'étape a), on prend en compte la moyenne de ces valeurs de pression statique.

De façon avantageuse, à l'étape b), on calcule ledit coefficient de portance Cz, à l'aide des expressions suivantes :

$$\begin{cases} Cz = \dfrac{nz.m.g}{0,7.PS.M^2.S} \\[2em] M = \sqrt{5\left[\left(\dfrac{PT}{PS}\right)^{2/7} - 1\right]} \end{cases}$$

dans lesquelles :

- PS représente ladite valeur de pression statique ;
- PT représente ladite valeur de pression totale ;
- M représente le nombre de Mach de l'aéronef ;
- S représente une surface de référence qui dépend de la géométrie de l'aéronef ;
- nz représente le facteur de charge longitudinal de l'aéronef ;
- m représente la masse de l'aéronef ; et
- g représente l'accélération de la pesanteur.

En outre, avantageusement, à l'étape c), on calcule ladite première valeur d'incidence à partir dudit coefficient de portance, ainsi qu'à partir de la configuration de l'aéronef et du centrage dudit aéronef, et de plus à partir du nombre de Mach de l'aéronef, lorsque ce dernier est en configuration lisse.

Dans un mode de réalisation préféré, à l'étape d), on détermine ladite seconde valeur d'incidence à l'aide d'une mesure réalisée par au moins une sonde d'incidence. On sait qu'une telle sonde d'incidence présente une fiabilité très élevée. Par conséquent, la détection d'une information de vitesse non valable est mise en oeuvre par la comparaison entre une incidence faillible (première valeur d'incidence dépendant desdites pressions statique et totale susceptibles d'être erronées) et une incidence quasi-infaillible (seconde valeur d'incidence fournie par ladite sonde d'incidence).

Bien entendu, la procédé conforme à l'invention peut être utilisé pour surveiller simultanément la validité d'une pluralité d'informations de vitesse différentes. Dans ce cas, selon l'invention, on met en oeuvre lesdites étapes a) à g) pour chacune desdites informations de vitesse.

La présente invention concerne également un dispositif de surveillance de la validité d'au moins une information de vitesse d'un aéronef, qui est déterminée à partir d'au moins une valeur de pression statique et d'au moins une valeur de pression totale. Ce dispositif est susceptible de mettre en oeuvre le procédé précité.

A cet effet, ledit dispositif est remarquable, selon l'invention, en ce qu'il comporte :

- un premier moyen pour prendre en compte lesdites valeurs de pression statique et totale, utilisées pour déterminer ladite information de vitesse ;
- un deuxième moyen pour calculer, à partir desdites valeurs de pression statique et totale, un coefficient de portance qui est représentatif de la portance de l'aéronef ;
- un troisième moyen pour calculer, à partir de ce coefficient de portance, une première valeur d'incidence ;
- un quatrième moyen pour déterminer une seconde valeur d'incidence ;
- un cinquième moyen pour calculer la différence entre lesdites première et seconde valeurs d'incidence ;

- un sixième moyen pour comparer la valeur absolue de cette différence à une valeur de seuil prédéterminée ; et
- un septième moyen pour déduire de ladite comparaison que :

  • ladite information de vitesse est valable, si la valeur absolue de ladite différence est inférieure à ladite valeur de seuil ; et
  • ladite information de vitesse n'est pas valable, sinon.

La présente invention concerne, de plus, un système de génération d'au moins une information de vitesse d'un aéronef.

Selon l'invention, ledit système du type comportant :

- au moins une première sonde pour mesurer une valeur de pression statique ;
- au moins une seconde sonde pour mesurer une valeur de pression totale ; et
- au moins un calculateur pour calculer ladite information de vitesse à partir desdites valeurs de pression statique et totale mesurées par lesdites première et seconde sondes,

est remarquable en ce qu'il comporte, de plus :

- un dispositif de surveillance tel que décrit précédemment ; et
- au moins une sonde d'incidence pour mesurer l'incidence de l'aéronef, la mesure réalisée par cette sonde d'incidence étant prise en compte par ledit quatrième moyen (dudit dispositif de surveillance) comme seconde valeur d'incidence.

Dans un mode de réalisation particulier, le système conforme à l'invention comporte, de plus, un moyen d'inhibition permettant d'inhiber la surveillance mise en oeuvre par ledit dispositif de surveillance.

En outre, dans un mode de réalisation préféré, ledit système comporte :

- un ensemble de quatre premières sondes ;
- un capteur de pression pour mesurer une valeur de pression statique ;
- un ensemble de trois secondes sondes ; et
- trois calculateurs pour calculer trois informations de vitesse différentes, à partir des valeurs mesurées respectivement par :

  • deux desdites premières sondes et une première desdites secondes sondes ;
  • les deux autres premières sondes et une deuxième desdites secondes sondes ; et
  • ledit capteur de pression et la troisième desdites secondes sondes, et ledit dispositif de surveillance surveille la validité de chacune desdites trois informations de vitesse.

Les figures du dessin annexé feront bien comprendre comment l'invention peut être réalisée. Sur ces figures, des références identiques désignent des éléments semblables.

La figure 1 est le schéma synoptique d'un dispositif de surveillance conforme à l'invention.

La figure 2 illustre partiellement un avion, auquel on applique la présente invention.

Les figures 3 et 4 sont deux graphiques permettant de bien mettre en évidence une étape particulière d'un procédé conforme à l'invention.

La figure 5 est le schéma synoptique d'un système de génération d'information de vitesse, conforme à l'invention.

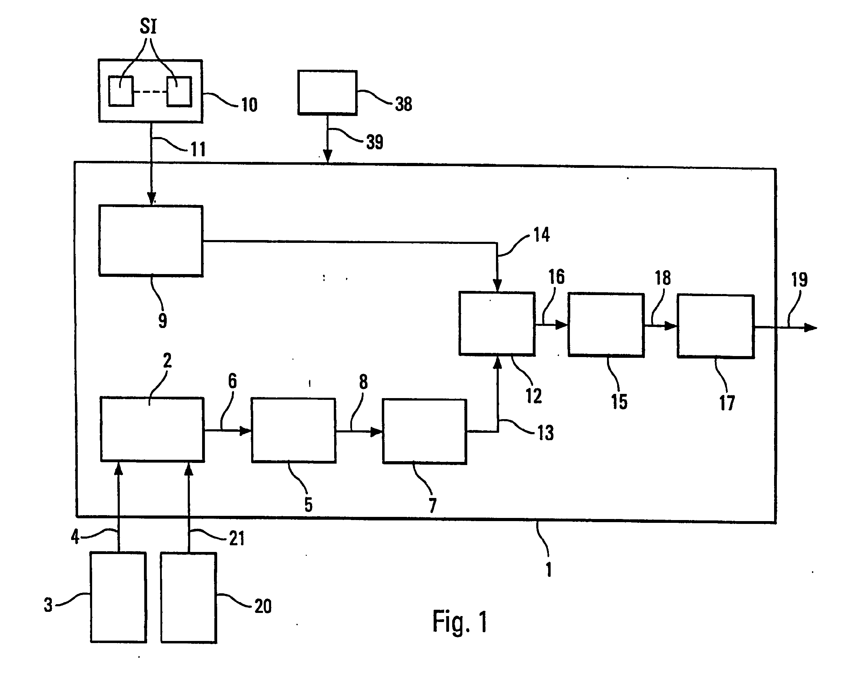

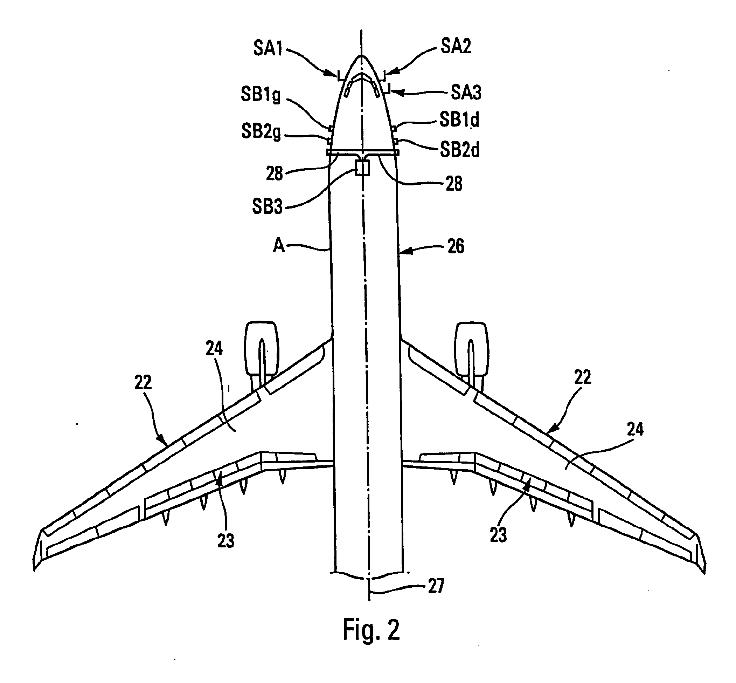

Le dispositif 1 conforme à l'invention et représenté schématiquement sur la figure 1 est destiné à la surveillance de la validité d'au moins une information de vitesse (c'est-à-dire d'une valeur de vitesse) d'un aéronef A, en particulier d'un avion de transport, comme représenté sur la figure 2. Dans le cadre de la présente invention, ladite information de vitesse est déterminée à partir au moins d'une valeur de pression statique PS et au moins d'une valeur de pression totale PT, comme précisé ci-dessous.

Selon l'invention, ledit dispositif 1 comporte :

- un moyen 2 pour prendre en compte lesdites valeurs de pression statique et totale utilisées pour déterminer ladite information de vitesse. Il reçoit ces valeurs PS et PT d'un ensemble 3 de sources d'informations, précisées ci-dessous, par une liaison 4 ;
- un moyen 5 qui est relié par une liaison 6 au moyen 2, pour calculer, à partir desdites valeurs de pression statique et totale PS et PT, un coefficient de portance Cz qui est représentatif de la portance de l'aéronef A ;
- un moyen 7 qui est relié par une liaison 8 au moyen 5, pour calculer, à partir de ce coefficient de portance Cz, une première valeur d'incidence $\alpha A$ ;
- un moyen 9 pour déterminer une seconde valeur d'incidence $\alpha B$, à partir de mesures réalisées par un ensemble 10 de sondes d'incidence SI qui sont très fiables, lesdites mesures étant reçues par une liaison 11 ;
- un moyen 12 qui est relié par des liaisons 13 et 14 respectivement auxdits moyens 7 et 9, pour calculer la différence D entre lesdites première et seconde valeurs d'incidence : $D = \alpha A - \alpha B$ ;
- un moyen 15 qui est relié par une liaison 16 au moyen 12, pour comparer la valeur absolue |D| de cette différence D à une valeur de seuil SO prédéterminée ; et
- un moyen 17 qui est relié par une liaison 18 au moyen 15, pour déduire de ladite comparaison :

- que ladite information de vitesse est valable, si la valeur absolue |D| de ladite différence D est inférieure à ladite valeur de seuil SO ; et
- que ladite information de vitesse n'est pas valable, si ladite valeur absolue |D| est supérieure ou égale à ladite valeur de seuil SO, le résultat étant transmis par une liaison 19.

Dans un mode de réalisation préféré, le moyen 5 calcule ledit coefficient de portance Cz, à l'aide des expressions (1) et (2) suivantes :

$$Cz = \frac{nz.m.g}{0,7.PS.M^2.S} \qquad (1)$$

$$M = \sqrt{5\left[\left(\frac{PT}{PS}\right)^{2/7} - 1\right]} \qquad (2)$$

dans lesquelles :

- PS représente ladite valeur de pression statique ;
- PT représente ladite valeur de pression totale ;
- M représente le nombre de Mach de l'aéronef A ;
- S représente une surface de référence qui dépend de la géométrie de l'aéronef A ;
- nz représente le facteur de charge longitudinal de l'aéronef A ;
- m représente la masse de l'aéronef A ; et
- g représente l'accélération de la pesanteur.

Les valeurs de pression PS et PT sont fournies par l'ensemble 3 précisé ci-dessous et comportant des sources d'informations sujettes à des pannes. Ces valeurs PS et PT qui sont utilisées pour calculer l'information de vitesse surveillée, sont donc faillibles.

En revanche, les paramètres nz, m, g et S précités sont issus d'un ensemble 20 de sources d'informations quasiment infaillibles. Cet ensemble 20 est relié par une liaison 21 au dispositif 1. Plus précisément, le facteur nz est fourni par des centrales inertielles de l'aéronef A et la masse m est fournie par un calculateur usuel en charge du centrage de l'aéronef A. L'accélération de la pesanteur g et la surface de référence S sont des constantes, g valant 9,81 m/s². La valeur de S est connue et calculée en fonction de l'aéronef A considéré. Ainsi, chaque aéronef A possède une valeur propre de surface de référence S. Ces dernières informations sont donc considérées comme fiables.

Concernant les traitements mis en oeuvre par le moyen 7, on prend en compte une relation entre le coefficient Cz et l'incidence αA, dépendant également de la configuration des becs 22 et des volets 23 prévus sur les ailes 24 de l'avion A (figure 2), du centrage de l'avion A et de son nombre de Mach. On décrit ci-après la présente invention, en l'appliquant audit avion A de la figure 2. La relation précitée est donc déterminée par une modélisation aérodynamique de l'avion A. Des essais en vol sont ensuite mis en oeuvre pour affiner les résultats obtenus par cette modélisation. On obtient ainsi des courbes exprimant le coefficient Cz en fonction de l'incidence αA, du centrage de l'avion A et du nombre de Mach. Pour une configuration donnée de l'avion A, il existe donc un réseau de courbes C1 à C4 qui sont fonction du centrage de l'avion A, c'est-à-dire de la position de son centre de gravité sur la corde de référence, de l'incidence de l'avion A et du nombre de Mach.

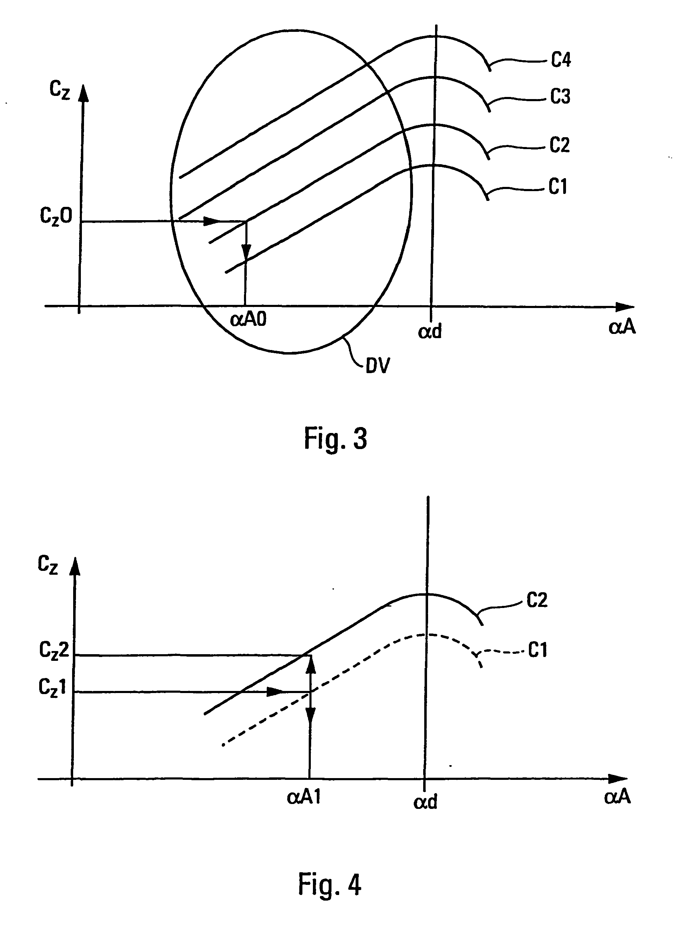

Sur la figure 3, on a représenté, pour une configuration particulière de l'avion A, c'est-à-dire pour des positions particulières desdits becs 22 et volets 23, la valeur du coefficient de portance Cz en fonction de l'incidence αA, pour une pluralité de centrages différents illustrés respectivement par des courbes C1 à C4. A titre d'illustration, ces courbes C1 à C4 peuvent correspondre, respectivement, à des centrages de 20%, 30%, 40% et 50%. On a également représenté le domaine de vol normal DV de l'avion A et l'incidence de décrochage αd. Par exemple, pour la configuration considérée par le graphique de la figure 3, avec un coefficient Cz de valeur Cz0 et un centrage de 30% (courbe C2), on obtient une valeur d'incidence αA de valeur αAO.

Ainsi, grâce à la connaissance de la configuration de l'avion A (fournie par un calculateur usuel qui gère cette configuration en fonction de la position des becs 22 et des volets 23), du centrage de l'avion A (fourni de façon usuelle par le calculateur qui fournit déjà la masse m) et du coefficient Cz calculé par le moyen 5, le moyen 7 est en mesure de déterminer ladite première valeur d'incidence αA.

On peut conserver toutes les courbes C1 à C4 pour chaque centrage ou remarquer que dans le domaine de vol normal DV (c'est-à-dire celui où l'avion A vole en plus grande majorité), les courbes sont linéaires. Dans ce cas, il est possible de simplifier le réseau de courbes, en ne gardant qu'une seule courbe (par exemple la courbe C2 à 30%) et en réalisant une extrapolation pour tout centrage différent (de 30%), comme représenté sur la figure 4. Dans ce cas, à partir d'un coefficient Cz de valeur Cz1 calculée par le moyen 5, pour un centrage de 20% (courbe C1 représentée en traits interrompus pour faciliter la compréhension), on calcule par linéarité la valeur de Cz2, que l'on aurait si le centrage avait été de 30%, et connaissant la relation entre le coefficient Cz à 30% et la valeur αA (courbe C2), on en déduit la valeur correspondante de l'incidence αA, en l'occurrence αA1.

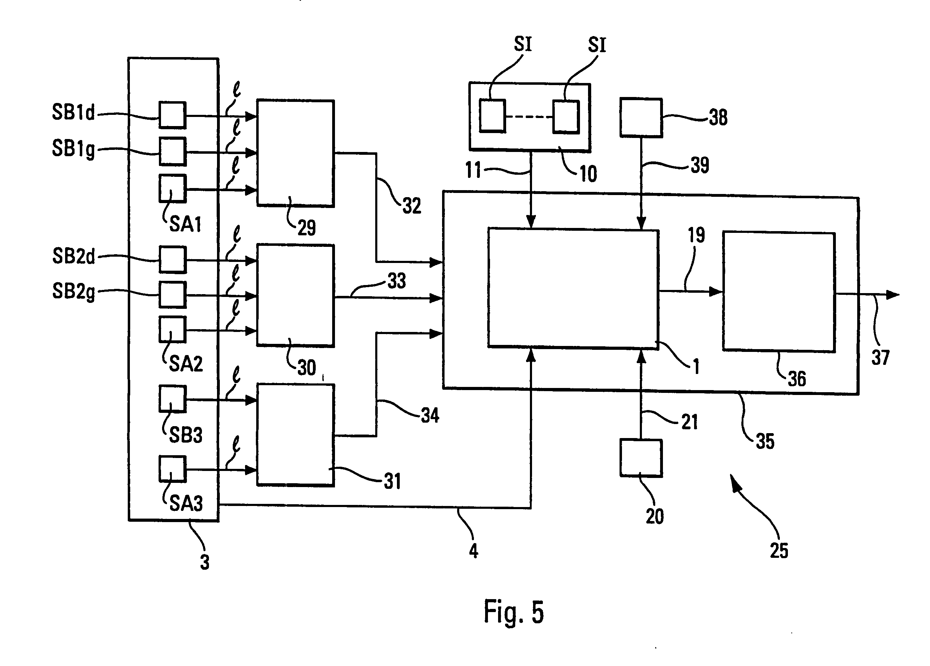

Bien que non exclusivement, la présente invention s'applique plus particulièrement à un système 25 de génération d'au moins une information de vitesse, tel que représenté sur la figure 5, d'un avion A (figure 2).

Ledit système 25 comporte l'ensemble 3 de sources d'informations pour engendrer des valeurs de pression statique PS et de pression totale PT. Dans un mode de réalisation préféré, ledit ensemble 3 comporte :

- trois sondes "pitots" SA1, SA2, SA3 qui sont installées sur le fuselage 26 de l'avion A, comme illustré schématiquement sur la figure 2, pour mesurer la pression totale, à savoir respectivement PT1, PT2 et PT3 ;
- quatre sondes "poivrières" SB1d, SB1g, SB2d, SB2g qui sont installées sur le fuselage 26 de l'avion A de part et d'autre de son axe longitudinal 27, pour mesurer la pression statique, à savoir respectivement PS1 d, PS1 g, PS2d et PS2g ; et
- un capteur de pression SB3 qui mesure la pression statique PS3 et qui est relié, de chaque côté du fuselage 26, à l'air libre, par l'intermédiaire d'un simple tuyau 28.

Le système 25 comporte de plus des calculateurs 29, 30, 31, en particulier du type ADC ("Air Data Computer"), qui calculent chacun à partir des mesures réalisées par ledit ensemble 3, dont les sources d'informations sont reliées par des liaisons I auxdits calculateurs 29, 30, 31, une vitesse V1, V2, V3 représentant une information de vitesse à surveiller. Plus précisément :

- le calculateur 29 reçoit les valeurs PT1, PS1d et PS1g. Il fait la moyenne de PS1d et PS1g pour former PS1 moyennée, puis calcule la vitesse V1 à partir de PT1 et de PS1 moyennée ;
- le calculateur 30 reçoit les valeurs PT2, PS2d et PS2g. Il fait la moyenne de PS2d et PS2g pour former PS2 moyennée, puis calcule la vitesse V2 à partir de PT2 et de PS2 moyennée ; et
- le calculateur 31 reçoit les valeurs PT3 et PS3. Il calcule la vitesse V3 à partir de ces valeurs PT3 et PS3.

Généralement, les vitesses V1 et V2 sont directement affichées à l'équipage de l'avion A, V1 étant affiché sur l'un des écrans de visualisation du poste de pilotage et V2 sur l'autre. Néanmoins, l'équipage conserve la possibilité, en cas de doute, d'afficher la vitesse V3 provenant du calculateur 31, sur l'un ou l'autre desdits écrans de visualisation.

Ces informations de vitesse V1, V2 et V3 sont transmises par l'intermédiaire de liaisons 32, 33 et 34 à un calculateur de commande de vol 35 usuel, qui les utilise pour calculer à l'aide d'une fonction 36 mettant en oeuvre une loi de commande usuelle, des ordres de commandes de vol qui sont, ensuite, transmis par une liaison 37 à des dispositifs utilisateurs usuels non représentés.

Dans cette application, le dispositif de surveillance 1 a pour objet de surveiller la validité des différentes informations de vitesse V1, V2 et V3 calculées par lesdits calculateurs 29, 30 et 31.

A cet effet, ledit système 25 comporte donc également :

- ledit dispositif de surveillance 1 ;

- ledit ensemble 10 de sondes d'incidence SI ; et
- ledit ensemble 20 de sources d'informations.

Pour chacune des informations de vitesse V1 à V3, le dispositif de surveillance 1 met en oeuvre les différentes étapes précitées. Il détermine donc notamment, pour chacune d'elles, un coefficient Cz et une incidence $\alpha A$ qui est comparée à une incidence $\alpha B$ obtenue à partir de l'ensemble 10.

A titre d'illustration, ledit ensemble 10 peut comporter deux sondes d'incidence SI, par exemple de type "girouette", qui sont installées symétriquement sur les ailes 24 de l'avion A, et l'incidence $\alpha B$ correspond à la moyenne (calculée par exemple par le moyen 9) des mesures réalisées par ces deux sondes d'incidence SI.

Lorsqu'il détecte une information de vitesse non valable, le dispositif de surveillance 1, en informe les différents dispositifs utilisateurs par la liaison 19, et notamment le calculateur de commande de vol 35. Dans le mode de réalisation préféré représenté, ledit dispositif de surveillance 1 est directement intégré dans ledit calculateur de commande de vol 35.

Comme indiqué ci-dessus, dans un avion dans lequel la présente invention n'est pas implantée, après une invalidité déclarée d'une première information de vitesse puis un problème sur l'une des deux autres informations de vitesse restantes, l'avion passe en mode dégradé, car le calculateur de commande de vol ne sait pas déterminer quelle source d'information est invalide. Au contraire, grâce à la présente invention, dans le cas où seules deux valeurs sont disponibles, le calculateur de commande de vol 35 est en mesure d'écarter le cas échéant la valeur erronée et de conserver la valeur saine de sorte que, dans cette situation, l'avion A ne passe pas en mode dégradé et les lois de commande continuent à être calculées de manière usuelle.

Dans le cas d'une erreur de maintenance amenant l'avion A à décoller alors que les sondes de pression statique ou dynamique ne sont pas opérationnelles, la présente invention permet de détecter les informations de vitesse erronées. En particulier, dans le cas d'une cohérence entre deux sources d'information, mais qui néanmoins ne sont pas représentatives de l'environnement dans lequel évolue l'avion, l'invention permet de détecter ce problème. Il est, dans ce cas, aisé de désigner à l'équipage de manière infaillible si la ou les informations de vitesse affichées représentent effectivement l'environnement dans lequel évolue l'avion A.

Par ailleurs, ledit système 25 comporte, de plus, un moyen d'inhibition 38, manuel ou automatique, qui est relié par une liaison 39 au dispositif de surveillance 1 et qui permet d'inhiber la surveillance mise en oeuvre par le dispositif de surveillance 1.

On peut, en particulier inhiber ou désactiver ledit dispositif de surveillance 1 :

- lorsque l'avion A est au sol ;
- lorsque les becs 22 et les volets 23 sont en phase transitoire (rétraction ou déploiement), les courbes Cz = f($\alpha$A, centrage avion, configuration des becs et volets, nombre de Mach) étant uniquement valables en régime stabilisé ; et

- lorsque les aérofreins de l'avion A sont sortis.

## Revendications

1. Procédé de surveillance de la validité d'au moins une information de vitesse d'un aéronef (A), qui est déterminée à partir d'au moins une valeur de pression statique et d'au moins une valeur de pression totale,
**caractérisé en ce que** l'on réalise, de façon répétitive, les étapes successives suivantes :

a) on prend en compte lesdites valeurs de pression statique et totale, utilisées pour déterminer ladite information de vitesse ;
b) on calcule, à partir desdites valeurs de pression statique et totale, un coefficient de portance (Cz) qui est représentatif de la portance de l'aéronef (A) ;
c) on calcule, à partir de ce coefficient de portance (Cz), une première valeur d'incidence ($\alpha$A) faillible ;
d) on détermine une seconde valeur d'incidence quasi-infaillible, à l'aide d'une mesure réalisée par au moins une sonde d'incidence (SI) ;
e) on calcule la différence entre lesdites première et seconde valeurs d'incidence ;
f) on compare la valeur absolue de cette différence à une valeur de seuil prédéterminée ; et
g) on déduit de ladite comparaison que :

- ladite information de vitesse est valable, si la valeur absolue de ladite différence est inférieure à ladite valeur de seuil ; et
- ladite information de vitesse n'est pas valable, sinon.

2. Procédé selon la revendication 1,
**caractérisé en ce que** l'on utilise au moins deux valeurs de pression statique, et **en ce qu'**à l'étape a), on prend en compte la moyenne de ces valeurs de pression statique.

3. Procédé selon l'une des revendications 1 et 2,
**caractérisé en ce qu'**à l'étape b), on calcule ledit coefficient de portance Cz à l'aide des expressions suivantes :

$$\begin{cases} Cz = \dfrac{nz.m.g}{0,7.PS.M^2.S} \\[2em] M = \sqrt{5\left[\left(\dfrac{PT}{PS}\right)^{2/7} - 1\right]} \end{cases}$$

dans lesquelles :

- PS représente ladite valeur de pression statique ;
- PT représente ladite valeur de pression totale ;
- M représente le nombre de Mach de l'aéronef (A) ;
- S représente une surface de référence qui dépend de la géométrie de l'aéronef (A) ;
- nz représente le facteur de charge longitudinal de l'aéronef (A) ;
- m représente la masse de l'aéronef (A) ; et
- g représente l'accélération de la pesanteur.

4. Procédé selon l'une quelconque des revendications précédentes,
**caractérisé en ce qu'**à l'étape c), on calcule ladite première valeur d'incidence ($\alpha$A), à partir dudit coefficient de portance (Cz), ainsi qu'à partir de la configuration de l'aéronef (A) et du centrage dudit aéronef (A).

5. Procédé selon la revendication 4,
**caractérisé en ce qu'**à l'étape c), on calcule ladite première valeur d'incidence ($\alpha$A), de plus à partir du nombre de Mach de l'aéronef (A) lorsque ce dernier est en configuration lisse.

6. Procédé selon l'une quelconque des revendications précédentes, pour surveiller simultanément la validité d'une pluralité d'informations de vitesse,
**caractérisé en ce que** l'on met en oeuvre lesdites étapes a) à g) pour chacune desdites informations de vitesse.

7. Dispositif de surveillance de la validité d'au moins une information de vitesse d'un aéronef (A), qui est déterminée à partir d'au moins une valeur de pression statique et d'au moins une valeur de pression totale,
**caractérisé en ce qu'**il comporte :

- un premier moyen (2) pour prendre en compte lesdites valeurs de pression statique et totale, utilisées pour déterminer ladite information de vitesse ;
- un deuxième moyen (5) pour calculer, à partir desdites valeurs de pression statique et totale, un coefficient de portance (Cz) qui est représentatif de la portance de l'aéronef (A) ;

- un troisième moyen (7) pour calculer, à partir de ce coefficient de portance (Cz), une première valeur d'incidence ($\alpha$A) faillible ;

- un quatrième moyen (9) pour déterminer une seconde valeur d'incidence quasi-infaillible, à l'aide d'une mesure réalisée par au moins une sonde d'incidence (SI) ;

- un cinquième moyen (12) pour calculer la différence entre lesdites première et seconde valeurs d'incidence ;

- un sixième moyen (15) pour comparer la valeur absolue de cette différence à une valeur de seuil prédéterminée ; et

- un septième moyen (17) pour déduire de ladite comparaison que :

> • ladite information de vitesse est valable, si la valeur absolue de ladite différence est inférieure à ladite valeur de seuil ; et
> • ladite information de vitesse n'est pas valable, sinon.

**8.** Système de génération d'au moins une information de vitesse d'un aéronef (A), ledit système (25) comportant :

> - au moins une première sonde (SB1d, SB1g, SB2d, SB2g, SB3) pour mesurer une valeur de pression statique ;
> - au moins une seconde sonde (SA1, SA2, SA3) pour mesurer une valeur de pression totale ; et
> - au moins un calculateur (29, 30, 31) pour calculer ladite information de vitesse à partir desdites valeurs de pression statique et totale mesurées par lesdites première et seconde sondes,

**caractérisé en ce qu'**il comporte de plus :

> - un dispositif de surveillance (1) tel que celui spécifié sous la revendication 7 ; et
> - au moins une sonde d'incidence (SI) pour mesurer l'incidence de l'aéronef (A), la mesure réalisée par cette sonde d'incidence (SI) étant prise en compte par ledit quatrième moyen (9) dudit dispositif de surveillance (1) comme seconde valeur d'incidence.

**9.** Système selon la revendication 8, **caractérisé en ce qu'**il comporte, de plus, un moyen d'inhibition (38) permettant d'inhiber la surveillance mise en oeuvre par ledit dispositif de surveillance (1).

**10.** Système selon l'une quelconque des revendications 8 et 9, **caractérisé en ce que** ledit dispositif de surveillance (1) fait partie d'un calculateur de commande de vol (35) qui utilise ladite information de vitesse, au moins pour calculer des ordres de commande de vol de l'aéronef (A).

**11.** Système selon l'une quelconque des revendications 8 à 10, **caractérisé en ce qu'**il comporte :

> - un ensemble de quatre premières sondes (SB1d, SB1g, SB2d, SB2g) ;
> - un capteur de pression (SB3) pour mesurer une valeur de pression statique ;
> - un ensemble de trois secondes sondes (SA1, SA2, SA3) ; et
> - trois calculateurs (29, 30, 31) pour calculer trois informations de vitesse différentes, à partir des valeurs mesurées, respectivement, par :

>> • deux (SB1d, SB1g) desdites premières sondes et une première (SA1) desdites secondes sondes ;
>> • les deux (SB2d, SB2g) autres premières sondes et une deuxième (SA2) desdites secondes sondes ; et
>> • ledit capteur de pression (SB3) et la troisième (SA3) desdites secondes sondes,

et **en ce que** ledit dispositif de surveillance (1) surveille la validité de chacune desdites trois informations de vitesse.

## Claims

**1.** A process for monitoring the validity of at least one speed cue of an aircraft (A), which is determined on the basis of at least one value of static pressure and of at least one value of total pressure, **characterized in that** the following successive steps are carried out repetitively:

> a) said values of static and total pressure, used to determine said speed cue, are considered;
> b) a coefficient of lift (Cz) which is representative of the lift of the aircraft (A) is computed on the basis of said values of static and total pressure;
> c) a first value of angle of incidence ($\alpha$A) that is fallible is computed on the basis of this coefficient of lift (Cz);
> d) a second value of angle of incidence that is quasi-infallible is determined, with the aid of a measurement carried out by at least one angle of incidence probe (SI);
> e) the difference between said first and second values of angle of incidence is computed;
> f) the absolute value of this difference is compared with a predetermined threshold value; and
> g) from said comparison one deduces that:

- said speed cue is valid, if the absolute value of said difference is below said threshold value; and
- said speed cue is not valid, otherwise.

2. The process as claimed in claim 1, **characterized in that** at least two values of static pressure are used, and wherein in step a), the average of these values of static pressure is considered.

3. The process as claimed in one of claims 1 and 2, **characterized in that** in step b), said coefficient of lift Cz is computed with the aid of the following expressions:

$$\begin{cases} Cz = \dfrac{nz.m.g}{0.7.PS.M^2.S} \\ \\ M = \sqrt{5\left[\left(\dfrac{PT}{PS}\right)^{2/7} - 1\right]} \end{cases}$$

in which:

- PS represents said static pressure value;
- PT represents said total pressure value;
- M represents the Mach number of the aircraft (A);
- S represents a reference area which depends on the geometry of the aircraft (A);
- nz represents the longitudinal load factor of the aircraft (A);
- m represents the mass of the aircraft (A); and
- g represents the acceleration due to gravity.

4. The process as claimed in any one of the preceding claims, **characterized in that** in step c), said first value of angle of incidence (αA) is computed on the basis of said coefficient of lift (Cz), as well as on the basis of the configuration of the aircraft (A) and of the centering of said aircraft (A).

5. The process as claimed in claim 4, **characterized in that** in step c), said first value of angle of incidence (αA) is computed moreover on the basis of the Mach number of the aircraft (A) when the latter is in a smooth configuration.

6. The process as claimed in any one of the preceding claims, for simultaneously monitoring the validity of a plurality of speed cues,

**characterized in that** said steps a) to g) are implemented for each of said speed cues.

7. A device for monitoring the validity of at least one speed cue of an aircraft (A), which is determined on the basis of at least one value of static pressure and of at least one value of total pressure, **characterized in that** it comprises:

- a first means (2) for considering said values of static and total pressure, used to determine said speed cue;
- a second means (5) for computing, on the basis of said values of static and total pressure, a coefficient of lift (Cz) which is representative of the lift of the aircraft (A);
- a third means (7) for computing, on the basis of this coefficient of lift (Cz), a first value of angle of incidence (αA) that is fallible;
- a fourth means (9) for determining a second value of angle of incidence that is quasi-infallible, with the aid of a measurement carried out by at least one angle of incidence probe (SI) ;
- a fifth means (12) for computing the difference between said first and second values of angle of incidence;
- a sixth means (15) for comparing the absolute value of this difference with a predetermined threshold value; and
- a seventh means (17) for deducing from said comparison that:

  • said speed cue is valid, if the absolute value of said difference is below said threshold value; and
  • said speed cue is not valid, otherwise.

8. A system for generating at least one speed cue of an aircraft (A), said system (25) comprising:

- at least one first probe (SB1d, SB1g, SB2d, SB2g, SB3) for measuring a value of static pressure;
- at least one second probe (SA1, SA2, SA3) for measuring a value of total pressure; and
- at least one computer (29, 30, 31) for computing said speed cue on the basis of said values of static and total pressure measured by said first and second probes,

**characterized in that** it moreover comprises:

- a monitoring device (1) such as that specified under claim 7; and
- at least one angle of incidence probe (SI) for measuring the angle of incidence of the aircraft (A), the measurement carried out by this angle of incidence probe (SI) being considered by said fourth means (9) of said monitoring device (1) as second value of angle of incidence.

9. The system as claimed in claim 8, **characterized in that** it moreover comprises a disabling means (38) making it possible to disable the monitoring implemented by said monitoring device (1).

10. The system as claimed in any one of claims 8 and 9, **characterized in that** said monitoring device (1) forms part of a flight control computer (35) which uses said speed cue, at least to compute flight control orders of the aircraft (A).

11. The system as claimed in any one of claims 8 to 10, **characterized in that** it comprises:

   - a set of four first probes (SB1d, SB1g, SB2d, SB2g) ;
   - a pressure sensor (SB3) for measuring a value of static pressure;
   - a set of three second probes (SA1, SA2, SA3); and
   - three computers (29, 30, 31) for computing three different speed cues, on the basis of the value measured, respectively, by:

      • two (SB1d, SB1g) of said first probes and a first (SA1) of said second probes;
      • the other two (SB2d, SB2g) first probes and a second (SA2) of said second probes; and
      • said pressure sensor (SB3) and the third (SA3) of said second probes,

   and **in that** said monitoring device (1) monitors the validity of each of said three speed cues.

**Patentansprüche**

1. Verfahren zur Überwachung der Gültigkeit mindestens einer Geschwindigkeitsinformation eines Luftfahrzeugs (A), die aus mindestens einem statischen Druckwert und aus mindestens einem Gesamtdruckwert bestimmt wird, **dadurch gekennzeichnet, dass** wiederholt die nachstehenden aufeinanderfolgenden Schritte ausgeführt werden:

   a) Berücksichtigen der statischen und Gesamtdruckwerte, die verwendet werden, um die Geschwindigkeitsinformation zu bestimmen;
   b) Berechnen aus den statischen und Gesamtdruckwerten eines Auftriebskoeffizienten (Cz), der den Auftrieb des Luftfahrzeugs (A) darstellt;
   c) Berechnen aus diesem Auftriebskoeffizienten (Cz), eines ersten fehlbaren Anstellwinkelwertes (αA);
   d) Bestimmen eines zweiten nahezu unfehlbaren Anstellwinkelwertes anhand einer Messung, die von mindestens einem Anstellwinkelfühler (SI) durchgeführt wird;
   e) Berechnen des Unterschieds zwischen den ersten und zweiten Anstellwinkelwerten;
   f) Vergleichen des absoluten Wertes dieses Unterschieds mit einem vorherbestimmten Schwellenwert; und
   g) Ableiten aus dem Vergleich, dass

      - die Geschwindigkeitsinformation gültig ist, wenn der absolute Wert des Unterschieds kleiner ist als der Schwellenwert; und
      - die Geschwindigkeitsinformation andernfalls nicht gültig ist.

2. Verfahren nach Anspruch 1, **dadurch gekennzeichnet, dass** mindestens zwei statische Druckwerte verwendet werden, und dass in Schritt a) der Mittelwert dieser statischen Druckwerte berücksichtigt wird.

3. Verfahren nach einem der Ansprüche 1 und 2, **dadurch gekennzeichnet, dass** in Schritt b) der Auftriebskoeffizient Cz anhand der folgenden Ausdrücke berechnet wird:

$$\begin{cases} Cz = \dfrac{nz.m.g}{0{,}7.PS.M^2.S} \\ M = \sqrt{5\left[\left(\dfrac{PT}{PS}\right)^{2/7} - 1\right]} \end{cases}$$

wobei:

   - PS der statische Druckwert ist;
   - PT der Gesamtdruckwert ist;
   - M die Machzahl des Luftfahrzeugs (A) ist;
   - S eine Bezugsfläche ist, die von der Geometrie des Luftfahrzeugs (A) abhängt;
   - nz der Längslastfaktor des Luftfahrzeugs (A) ist;
   - m die Masse des Luftfahrzeugs (A) ist; und
   - g die Erdbeschleunigung ist.

4. Verfahren nach einem der vorhergehenden Ansprüche, **dadurch gekennzeichnet, dass** in Schritt c) der erste Anstellwinkelwert (αA) aus dem Auftriebskoeffizienten (Cz) und aus der Konfiguration des Luftfahrzeugs (A) und der Zentrierung des Luftfahrzeugs (A) berechnet wird.

5. Verfahren nach Anspruch 4, **dadurch gekennzeichnet, dass** in Schritt c) der erste Anstellwinkelwert ($\alpha$A) zudem aus der Machzahl des Luftfahrzeugs (A) berechnet wird, wenn sich dieses in Reiseflugkonfiguration befindet.

6. Verfahren nach einem der vorhergehenden Ansprüche zum gleichzeitigen Überwachen einer Vielzahl von Geschwindigkeitsinformationen, **dadurch gekennzeichnet, dass** die Schritte a) bis g) für jede der Geschwindigkeitsinformationen umgesetzt werden.

7. Vorrichtung zur Überwachung der Gültigkeit einer Geschwindigkeitsinformation eines Luftfahrzeugs (A), die aus mindestens einem statischen Druckwert und aus mindestens einem Gesamtdruckwert bestimmt wird,
   **dadurch gekennzeichnet, dass** sie Folgendes umfasst:

   - ein erstes Mittel (2) zum Berücksichtigen der statischen und Gesamtdruckwerte, die verwendet werden, um die Geschwindigkeitsinformation zu bestimmen;
   - ein zweites Mittel (5) zum Berechnen aus den statischen und Gesamtdruckwerten eines Auftriebskoeffizienten (Cz), der den Auftrieb des Luftfahrzeugs (A) darstellt;
   - ein drittes Mittel (7) zum Berechnen aus diesem Auftriebskoeffizienten (Cz) eines ersten fehlbaren Anstellwinkelwertes ($\alpha$A);
   - ein viertes Mittel (9) zum Bestimmen eines zweiten nahezu unfehlbaren Anstellwinkelwertes anhand einer Messung, die durch mindestens einen Anstellwinkelfühler (SI) ausgeführt wird;
   - ein fünftes Mittel (12) zum Berechnen des Unterschieds zwischen den ersten und zweiten Anstellwinkelwerten;
   - ein sechstes Mittel (15) zum Vergleichen des absoluten Wertes dieses Unterschieds mit einem vorherbestimmten Schwellenwert; und
   - ein siebtes Mittel (17), um aus dem Vergleich abzuleiten, dass:

     • die Geschwindigkeitsinformation gültig ist, wenn der absolute Wert des Unterschieds kleiner als der Schwellenwert ist; und
     • die Geschwindigkeitsinformation andernfalls nicht gültig ist.

8. System zum Generieren mindestens einer Geschwindigkeitsinformation eines Luftfahrzeugs (A), wobei das System (25) Folgendes umfasst:

   - mindestens einen ersten Fühler (SB1d, SB1g, SB2d, SB2g, SB3) zum Messen eines statischen Druckwertes;
   - mindestens einen zweiten Fühler (SA1, SA2, SA3) zum Messen eines Gesamtdruckwertes; und
   - mindestens einen Rechner (29, 30, 31) zum Berechnen der Geschwindigkeitsinformation aus den statischen und Gesamtdruckwerten, die von den ersten und zweiten Fühlern gemessen wurden,
   **dadurch gekennzeichnet, dass** es ferner Folgendes umfasst:
   - eine Überwachungsvorrichtung (1) wie in Anspruch 7 angegeben; und
   - mindestens einen Anstellwinkelfühler (SI) zum Messen der Anstellung des Luftfahrzeugs (A), wobei die durch diesen Anstellwinkelfühler (SI) ausgeführte Messung von dem vierten Mittel (9) der Überwachungsvorrichtung (1) als zweiter Anstellwinkelwert berücksichtigt wird.

9. System nach Anspruch 8, **dadurch gekennzeichnet, dass** es zudem ein Sperrmittel (38) umfasst, das es ermöglicht, die durch die Überwachungsvorrichtung (1) umgesetzte Überwachung zu sperren.

10. System nach einem der Ansprüche 8 und 9, **dadurch gekennzeichnet, dass** die Überwachungsvorrichtung (1) Teil eines Flugsteuerungsrechners (35) ist, der die Geschwindigkeitsinformation mindestens zum Berechnen der Flugsteuerungsbefehle des Luftfahrzeugs (A) verwendet.

11. System nach einem der Ansprüche 8 bis 10, **dadurch gekennzeichnet, dass** es Folgendes umfasst:

    - eine Gruppe von vier ersten Fühlern (SB1d, SB1g, SB2d, SB2g);
    - einen Drucksensor (SB3) zum Messen eines statischen Druckwertes;
    - eine Gruppe von drei zweiten Fühlern (SA1, SA2, SA3); und
    - drei Rechner (29, 30, 31) zum Berechnen von drei unterschiedlichen Geschwindigkeitsinformationen aus den gemessenen Werten, jeweils durch:

      • zwei (SB1 d, SB1 g) der ersten Fühler und einen ersten (SA1) der zweiten Fühler;
      • die beiden (SB2d, SB2g) anderen ersten Fühler und einen zweiten (SA2) der zweiten Fühler; und
      • den Drucksensor (SB3) und den dritten (SA3) der zweiten Fühler,
      und dass die Überwachungsvorrichtung (1) die Gültigkeit jeder der drei Geschwindig-

**EP 1 498 737 B1**

keitsinformationen überwacht.

Fig. 1

Fig. 2

Fig. 3

Fig. 4

Fig. 5

SB1d SB1g SA1 29 32 SB2d SB2g SA2 30 33 SB3 SA3 31 34 3 4

SI SI 11 10 38 39 19 36 37 35 1 21 20 25

EP 1 498 737 B1

16